# EUROPÄISCHE PATENTSCHRIFT

(11) **EP 0 548 518 B1**
(45) Veröffentlichungstag und Bekanntmachung des Hinweises auf die Patenterteilung: **02.08.1995**
(21) Anmeldenummer: 92119041.9
(22) Anmeldetag: 06.11.1992
(51) Int. Cl.: B64C 1/14, E05B 17/00, E05B 63/24, E05C 3/04

(54) **Vorrichtung zum Ver- und Entriegeln einer Klappe**
Device to lock and unlock a panel
Dispositif pour verrouiller et déverrouiller une trappe

(30) Priorität: 20.12.1991 DE 4142312
(43) Veröffentlichungstag der Anmeldung: 30.06.1993
(73) Patentinhaber: Daimler-Benz Aerospace Airbus Gesellschaft mit beschränkter Haftung, 21129 Hamburg (DE)
(72) Erfinder: Allerding, Volker, W-2800 Bremen 1 (DE); Teichmann, Thorsten, W-2800 Bremen 66 (DE); Seelhorst, Albrecht, W-6246 Glashütten-Schlossborn (DE)
(74) Vertreter: Hansmann, Dierk, Dipl.-Ing.

(56) Entgegenhaltungen:
- DE-A- 4 102 272
- US-A- 2 747 906
- US-A- 3 240 523

## Beschreibung

Die Erfindung bezieht sich auf ein Deck eines Passagierraumes eines Verkehrsflugzeugs, mit einer zu einem Fracht- oder Aufenthaltsraum im Unterflurbereich führenden und in den Passagierraum schwenkbaren Klappe und einer Vorrichtung zum Ver- und Entriegeln der Klappe, bei der an der Klappe ein Lagerbock mit einem daran angelenkten Winkelhebel angeordnet ist, von dem ein Hebelarm als Handhabe ausgebildet ist und der andere Hebelarm eine Rolle aufweist, die in der Schließstellung in ein deckfestes Riegelelement eingreift und beim Öffnen der Klappe an einer deckfesten Stützkante abrollt.

Bei einer derartigen Vorrichtung (siehe DE-A-4 102 272) erfolgt das Verriegeln der Klappe mit der an einem Hebelarm angebrachten Rolle, die in ein vorgespanntes, die Rolle umfassendes Riegelelement eingreift. Beim Öffnen der Klappe nach Überwinden der Riegelvorspannung stützt sich die Rolle durch Abrollen an einer Stützkante ab und daher kann die Klappe auch gegen äußere Behinderungen geöffnet werden. Eine derartige Vorrichtung erlaubt es daher bei Verkehrsflugzeugen, in durch Klappen zugänglichen Aufenthaltsräumen zusätzliche Piloten oder Flugbegleiter, insbesondere auf Langstreckenflügen, mitreisen zu lassen, die im Bedarfsfall diese Räume durch die Klappen verlassen können.

Die vorliegende Erfindung geht von einer Vorrichtung zum Ver- und Entriegeln einer Klappe aus und zeigt eine Möglichkeit zur Gestaltung einer derartigen Vorrichtung.

Diese Vorrichtung ist erfindungsgemäß dadurch gekennzeichnet, daß der als einarmiger Hebel ausgebildete Winkelhebel an einem Ende im Lagerbock angelenkt ist und mit der im Abstand zur Anlenkung im Lagerbock angebrachten Rolle beim Öffnen und Schließen der Klappe in eine seitliche als Stützkante wirkende Führungsnut eingreift, und daß der einarmige Hebel ein federbelastetes Riegelelement trägt, das in der Schließstellung der Klappe hinter einen am Lagerbock angebrachten Anschlag greift.

Bei der erfindungsgemäßen Vorrichtung dient die Führungsnut mit einer Randkante als Stützkante für die Rolle, die in der verriegelten Schließstellung gleichzeitig in der Nut gehalten wird. Die Führungsnut ist hierbei an einem in einem Klappenrahmen seitlich angebrachten Beschlag vorgesehen und besteht aus einer parallel zum Deck verlaufenden Nut mit einer Einlaufkurve und einem Durchgang für die Rolle.

Die erfindungsgemäße Vorrichtung läßt in einem bevorzugten Ausführungsbeispiel auch ein Entriegeln von der Außenseite der Klappe zu. Hierzu ist der Anschlag seitlich verschiebbar und federnd abgestützt und mit einem in der Klappe angeordneten Stellelement verkoppelt. Weiterhin kann der Anschlag mit einem Auslöseelement versehen sein, das in der Schließstellung der Klappe einen Annäherungsschalter zum Melden der Klappenstellung beeinflußt.

Weitere Einzelheiten der Erfindung sind den Ansprüchen 5,6 und der Beschreibung zu entnehmen. Die Erfindung wird anhand der Beschreibung näher erläutert. Es zeigen:
- Fig. 1: eine Seitenansicht mit einer Klappe mit einer Vorrichtung in Schließstellung,
- Fig. 2: einen Schnitt II-II gemäß Fig. 1 **und**
- Fig. 3: eine Draufsicht auf eine Vorrichtung in Schließstellung der Klappe.

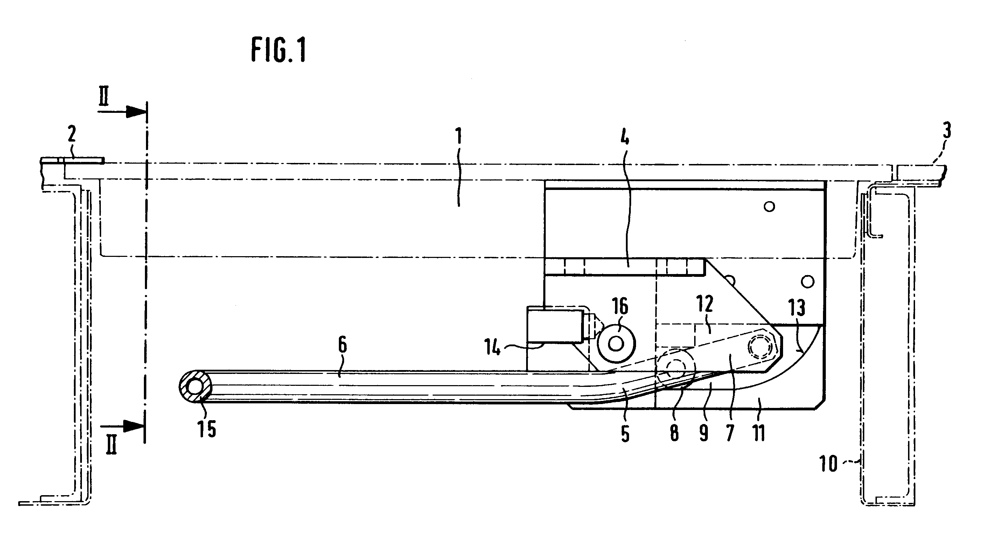

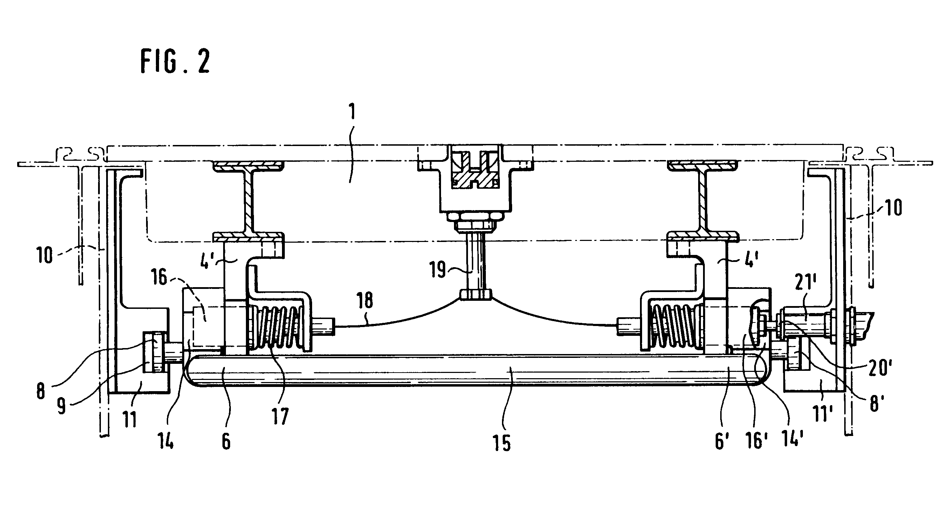

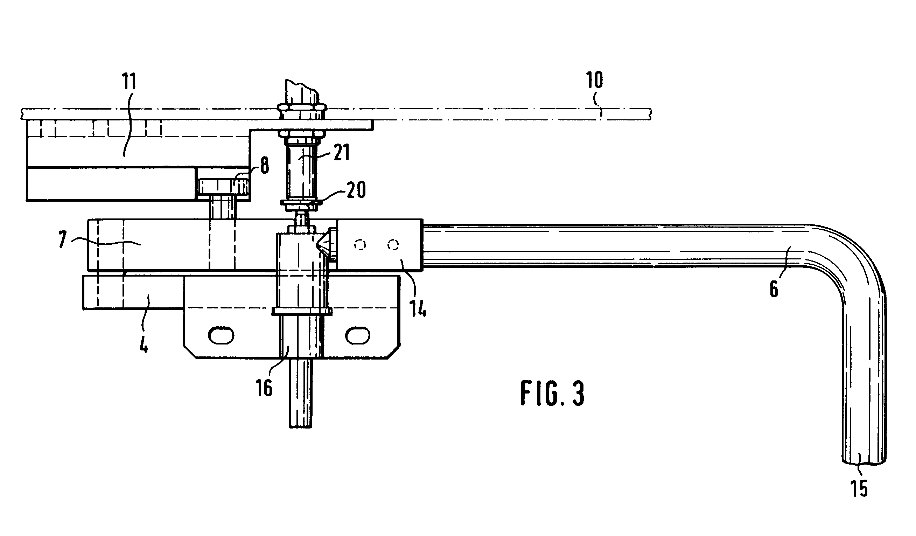

In den Darstellungen (nach Fig. 1 bis Fig. 3) ist das Prinzip einer Vorrichtung zum Ver- und Entriegeln einer Klappe 1 abgebildet, die mit einem Scharnier 2 an der Deckoberkante 3 eines Passagierdecks angelenkt ist. Auf der Innenseite der Klappe 1 ist eine Vorrichtung zum Ver- und Entriegeln angebracht, und zwar an der dem Scharnier 2 gegenüberliegenden Seite. Hierzu ist auf der Innenseite der Klappe 1 ein Lagerbock 4 angebracht, an dem ein Ende eines Winkelhebels 5 angelenkt ist. Der Winkelhebel 5 ist als Handhabe 6 ausgebildet und trägt eine seitliche Rolle 8, die mit kurzem Abstand 7 zur Anlenkung im Lagerbock 4 angebracht ist. Die Rolle 8 greift in der in Fig. 1 dargestellten Schließstellung in eine Führungsnut 9 ein, die in einem seitlich am Klappenrahmen 10 angebrachten Beschlag 11 vorgesehen ist. Diese Führungsnut 9 verläuft parallel zur Deckoberkante 3 und besitzt neben einem Durchgang 12 zum Eintritt der Rolle 8 eine Einlaufkurve 13.

An dem als Handhabe 6 ausgebildeten Winkelhebel 5 ist weiterhin ein federbelastetes Riegelelement 14 angebracht, das in der Schließstellung hinter einen am Lagerbock 4 angebrachten Anschlag 16 greift. Der Anschlag 16 ist mit einer Feder 17 abgestützt und über ein Zugelement 18 mit einem in der Klappe 1 angeordneten, von der Oberseite verstellbaren Stellelement 19 gekoppelt. Am Riegelelement 14 ist weiterhin ein Auslöseelement 20 vorgesehen, das in der Schließstellung der Klappe 1 einen Annäherungsschalter 21 zum Melden der Schließstellung beeinflußt.

Wie aus den Darstellungen nach Fig. 1 bis Fig. 3 zu erkennen ist, greift beim Schließen der Klappe 1 zunächst die Rolle 8 in die Führungsnut 9 ein, bis schließlich das Riegelelement 14 den Anschlag 16 erreicht und durch Überdrücken der Federvorspannung hinter den Anschlag 16 greift. Beim öffnen verläuft der Vorgang umgekehrt, d.h. zunächst muß die Federvorspannung des Riegelelementes durch Abwärtsschwenken der zu einem Bügel 15 zusammengefaßten zwei Handhaben 6 der auf beiden Seiten einer Klappe 1 angeordneten Vorrichtungen überwunden werden um danach durch weiteres Schwenken des Bügels die Klappe 1 zu Öffnen. Die Rolle 8 läuft dabei aus der Führungsnut heraus und stützt sich an der zu der Einlaufkurve 13 übergehenden Stützkante ab. Das Öffnen der Klappe 1 ist daher selbst dann möglich, wenn die Klappe 1 auf der Oberseite blockiert ist. Für die Anlenkung der Winkelhebel am Lagerbock 4 können auch exzentrische Lagerhülsen, insbesondere zum Ausgleich von Toleranzen, benutzt werden. Sollte es aus bestimmten Gründen erforderlich sein, die Klappe 1 von oben zu Öffnen, dann ist dies durch Verdrehen des in der Klappe 1 vorgesehenen Stellelementes 19 möglich. Das Stellelement 19 steht hierzu über Zugelemente 18 mit den seitlich verschiebbaren Anschlägen 16 in Verbindung und daher können die Riegelelemente 14 durch Zurückziehen der Anschläge 16 gelöst werden. Die Klappe 1 kann dann von oben geöffnet werden.

## Patentansprüche

1. Deck eines Passagierraumes eines Verkehrsflugzeugs, mit einer zu einem Fracht- oder Aufenthaltsraum im Unterflurbereich führenden und in den Passagierraum schwenkbaren Klappe und einer Vorrichtung zum Ver- und Entriegeln der Klappe, bei der an der Klappe ein Lagerbock mit einem daran angelenkten Winkelhebel angeordnet ist, von dem ein Hebelarm als Handhabe ausgebildet ist und der andere Hebelarm eine Rolle aufweist, die in der Schließstellung in ein deckfestes Riegelelement eingreift und beim Öffnen der Klappe an einer deckfesten Stützkante abrollt, dadurch gekennzeichnet, daß der als einarmiger Hebel ausgebildete Winkelhebel (5) an einem Ende im Lagerbock (4) angelenkt ist und mit der im Abstand (7) zur Anlenkung im Lagerbock (4) angebrachten Rolle (8) beim Öffnen und Schließen der Klappe (1) in eine seitliche als Stützkante (13) wirkende Führungsnut (9) eingreift, und daß der einarmige Hebel ein federbelastetes Riegelelement (14) trägt, das in der Schließstellung der Klappe (1) hinter einen am Lagerbock (4) angebrachten Anschlag (16) greift.

2. Deck nach Anspruch 1, dadurch gekennzeichnet, daß die Führungsnut (9) an einem in einem Klapprahmen (10) seitlich angebrachten Beschlag (11) vorgesehen ist und aus einer parallel zum Deck (3) verlaufenden Nut (9) mit einer Einlaufkurve (13) sowie einem Durchgang (12) für die Rolle (8) besteht.

3. Deck nach Anspruch 1 oder 2, dadurch gekennzeichnet, daß der Anschlag (16) seitlich verschiebbar und federnd abgestützt ist und mit einem in der Klappe (1) angeordneten Stellelement (19) zum Entriegeln der Klappe (1) gekoppelt ist.

4. Deck nach einem der Ansprüche 1 bis 3, dadurch gekennzeichnet, daß der Anschlag (16) mit einem Auslöseelement (20) versehen ist, das in der Schließstellung der Klappe (1) einen Annäherungsschalter (21) zum Melden der Klappenstellung beeinflußt.

5. Deck nach einem der Ansprüche 1 bis 4, dadurch gekennzeichnet, daß für die Anlenkung des Winkelhebels (5) im Lagerbock (4) zum Ausgleich von Toleranzen exzentrische Lagerhülsen eingesetzt sind.

6. Deck nach einem der Ansprüche 1 bis 5, dadurch gekennzeichnet, daß die Handhaben (6) zweier an den Seiten einer Klappe (1) angelenkten Winkelhebel (5) zu einem Bügel (15) vereinigt sind.

## Claims

1. Deck of a passenger area of a commercial aircraft, having a flap which leads to a hold or accommodation area in the underfloor region and may be swivelled into the passenger area, and a device for locking and unlocking the flap, wherein a bearing block is disposed on the flap and has coupled thereto an angle lever, of which one lever arm takes the form of a handle and the other lever arm comprises a roller, which in the closed position engages into a deck-fixed locking element and upon opening of the flap rolls along a deck-fixed supporting edge, characterized in that the angle lever (5) in the form of a one-armed lever is hinged at one end in the bearing block (4) and upon opening and closing of the flap (1) engages with the roller (8), which is provided at the distance (7) from the fulcrum in the bearing block (4), into a lateral guide groove (9) acting as supporting edge (13), and that the one-armed lever carries a spring-loaded locking element (14) which, in the closed position of the flap (1), engages behind a stop (16) provided on the bearing block (4).

2. Deck according to claim 1, characterized in that the guide groove (9) is provided in a fitting (11) provided laterally in a flap frame (10) and comprises a groove (9), which extends parallel to the deck (3) and has a run-in curve (13), as well as a passageway (12) for the roller (8).

3. Deck according to claim 1 or 2, characterized in that the stop (16) is supported in a laterally displaceable and sprung manner and is coupled to a control element (19) disposed in the flap (1) for unlocking the flap (1).

4. Deck according to one of claims 1 to 3, characterized in that the stop (16) is provided with a tripping element (20) which, in the closed position of the flap (1), influences a proximity switch (21) for signalling the flap position.

5. Deck according to one of claims 1 to 4, characterized in that eccentric bearing sleeves are used for the fulcrum of the angle lever (5) in the bearing block (4) in order to compensate tolerances.

6. Deck according to one of claims 1 to 5, characterized in that the handles (6) of two angle levers (5) coupled to the sides of a flap (1) are combined to form a bow (15).

## Revendications

1. Pont d'une cabine des passagers d'un avion de ligne présentant une trappe menant à une soute à fret ou à une cabine de séjour dans la zone du pont inférieur et pouvant pivoter dans la cabine des passagers, ainsi qu'un dispositif de verrouillage de la trappe dans le cas duquel un palier sur lequel est articulé un levier coudé est fixé sur la trappe, un bras dudit levier étant conçu comme une manette et l'autre bras dudit levier présentant une roulette, qui en position de fermeture s'engrène dans un élément de verrouillage fixé au pont et qui lors de l'ouverture de la trappe roule sur un bord d'appui fixé au pont, caractérisé en ce que le levier coudé (5) conçu comme un levier à un bras est articulé à une extrémité sur le palier (4) et s'engrène dans une rainure de guidage latérale (9) agissant comme un bord d'appui (13) lors de l'ouverture et de la fermeture de la trappe (1) au moyen de la roulette (8) placée à une certaine distance par rapport à l'articulation dans le palier (4) et en ce que le levier à un bras porte un élément de verrouillage (14) commandé par un ressort qui, en position de fermeture de la frappe s'engrène derrière un arrêt (16) monté sur le palier (4).

2. Pont selon la revendication 1, caractérisé en ce que la rainure de guidage (9) est prévue dans un organe (11) monté latéralement sur le châssis de trappe (10) et se compose d'une rainure (9) dirigée parallèlement au pont (3) et présentant une courbe d'entrée (13) ainsi qu'un passage (12) pour la roulette (8).

3. Pont selon l'une ou l'autre des revendications 1 et 2, caractérisé en ce que l'arrêt (16) peut être coulissé latéralement et est poussé par un ressort de même qu'il est accouplé à un élément de commande (19) disposé dans la trappe afin de permettre le déverrouillage de la trappe (1).

4. Pont selon l'une ou l'autre des revendications 1 à 3, caractérisé en ce que l'arrêt (16) est pourvu d'un élément de déclenchement (20), lequel, en position de fermeture de la trappe (1) influe sur un interrupteur d'approche (21) destiné à annoncer la position de la trappe.

5. Pont selon l'une ou l'autre des revendications 1 à 4, caractérisé en ce que pour l'articulation du levier courbé (5) dans le palier (4), des manchons excentriques sont utilisés pour ajuster les tolérances.

6. Pont selon l'une ou l'autre des revendications 1 à 5, caractérisé en ce que les manettes (6) des deux leviers (5) montés sur les côtés de la trappe, sont reliés par un arceau (15).
